**Europäisches Patentamt**

**European Patent Office**

**Office européen des brevets**

(11) Publication number: **0 406 747 A1**

# EUROPEAN PATENT APPLICATION

(21) Application number: **90112558.3**

(22) Date of filing: **02.07.90**

(51) Int. Cl.5: **C08L 101/00, C08L 25/04,** //(C08L101/00,53:02), (C08L25/04,53:02)

(30) Priority: **05.07.89 US 375552**

(43) Date of publication of application:
**09.01.91 Bulletin 91/02**

(84) Designated Contracting States:
**AT BE DE DK ES FR GB IT NL SE**

(71) Applicant: **THE DOW CHEMICAL COMPANY**
**2030 Dow Center Abbott Road**
**Midland, MI 48640(US)**

(72) Inventor: **Tung, Lu Ho**
**19 Kingwood Road**
**Oakland, California 94619(US)**
Inventor: **Randazzo, Joseph J.**
**2641 Sparta**
**Troy, Michigan 48083(US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2(DE)**

(54) Polymer blends of rigid thermoplastic polymers and tapered styrene-butadiene triblock thermoplastic elastomers and a process for preparation.

(57) A thermoplastic blend useful for the preparation of molded articles comprising a rigid thermoplastic polymer and a tapered triblock elastomer of a monovinylidene aromatic monomer and butadiene having a ratio of monovinylidene aromatic monomer:butadiene of 10:90 to 60:40; average molecular weight from 50,000 to 135,000.

The blend is easily prepared by extrusion blending or other techniques and does not require an extender oil in its preparation.

EP 0 406 747 A1

Xerox Copy Centre

## POLYMER BLENDS OF RIGID THERMOPLASTIC POLYMERS AND TAPERED STYRENE-BUTADIENE TRIBLOCK THERMOPLASTIC ELASTOMERS AND A PROCESS FOR PREPARATION

The present invention relates to a blend of a tapered styrene-butadiene triblock thermoplastic elastomer with a rigid thermoplastic polymer. More particularly the present invention relates to such a blend utilizing low molecular weight tapered triblock elastomers having improved mechanical properties and ease of preparation.

It is previously known in the art to prepare blends of thermoplastic elastomers and particular tapered styrene-butadiene block copolymer elastomers. In USPs 3,906,057 and 3,906,058 there are disclosed blends of polystyrene or impact modified polystyrene polymers with tapered styrene-butadiene triblock elastomers. However, the triblock elastomers in these prior art blends had high molecular weights in excess of 150,000 and preferably between 200,000 and 500,000. Such high molecular weight triblock elastomers are difficult to incorporate into thermoplastic resins due to the fact that the same have extremely low or even zero melt flow rates. Precise blending conditions had to be observed ( see USP 3,906,507, Col. 6, lines 25-35) to achieve the desired effect. The use of such high molecular weight triblock elastomers under more normal blending conditions requires addition of an extender oil such as a naphthalenic or paraffinic oil to produce a block copolymer composition which is flowable and easily incorporated into the thermoplastic polymer. Disadvantageously such extender oils detrimentally affect the physical properties of the resulting thermoplastic blend.

It would be desirable if there could be prepared blends of a rigid thermoplastic polymer and a taper triblock copolymer elastomer without the need to incorporate an extender oil.

According to the present invention there is provided a thermoplastic blend of:

1) a rigid thermoplastic polymer; and

2) from 0.5 to 20 weight percent of a tapered triblock elastomer of the formula A-B-A wherein B is a polymer of butadiene and each A block is a polymer of a monovinylidene aromatic monomer and at least one junction between the A and B blocks is tapered so as to include in copolymerized form increasing amounts of butadiene toward the B block;

said thermoplastic blend being characterized in that the tapered triblock elastomer has a ratio of monovinylidene aromatic monomer:butadiene of from 10:90 to 60:40 and an average molecular weight (Mw) of 50,000-150,000.

Rigid thermoplastics for use herein are characterized by glass transition temperature (Tg) of at least 25° C. Thermoplastic resins which may be advantageously modified by incorporation of the tapered triblock elastomers according to the present invention are those resins previously known in the art as suitably modified by the addition of rubbery elastomers. Examples include polystyrene, high impact polystyrene (i.e., styrene polymerized in the presence of a rubbery dissolved elastomer particularly polybutadiene), copolymers of styrene and one or more copolymerizable comonomers and rubber modified derivatives thereof, polyvinylchloride, polyphenylene ethers, polycarbonates, polyacetals, polyolefins such as polyethylene, polypropylene, and blends of the foregoing resins. Preferred thermoplastic polymers for use according to the present invention include polystyrene, styrene-acrylonitrile copolymers, and rubber modified derivatives thereof.

The tapered triblock elastomers for use according to the present invention may be prepared according to well known techniques. Suitable methods of preparation are previously disclosed in the aforementioned U.S. Patents 3,906,057 and 3,906,058 and generally involve solution polymerization of the respective monomers in the presence of organolithium initiators at temperatures from 30° to 85° C. Tapered or graded blocks are prepared by adding a second monomer to the polymerization mixture prior to complete exhaustion of the first monomer. In the case of mixtures of styrene and butadiene generally butadiene monomer preferentially polymerizes resulting in the preparation of a relatively pure polybutadiene initial block. As butadiene monomer is exhausted, gradually more styrene is incorporated in the polymer thereby generating a tapered junction until an essentially pure polystyrene block is formed. A preferred method of preparation of the tapered triblock elastomers is by the use of a soluble difunctional anionic initiator such as 1,3-phenylene-bis(3-methyl-1-phenylpentylidene)-bis-(lithium) in an organic solvent such as toluene.

Preferred block copolymers are triblock elastomers having two monovinylidene aromatic monomer tapered blocks incorporating a total of 10 percent by weight of butadiene therein. The concentration of butadiene in the tapered section of the block copolymer progressively increases in approach to the butadiene center block. Highly, preferably such tapered triblock elastomers are styrene-butadiene-styrene triblock polymers having a ratio of styrene to butadiene from 20:80 to 45:55, most preferably from 30:70 to 40:60 and an average molecular weight of 55,000 to 120,000. Most preferably, they have an average molecular weight of from 60,000 to 110,000. Also desirable according to the invention is the use of block copolymer resins having a melt index (condition 200/5.0 ASTM method D1238-82) of 0.5 to 60.

The amount of triblock copolymer employed in the blend is preferably from 1 to 15 percent based on total blend weight, more preferably from 3 to 10 percent.

In addition to the thermoplastic polymer and tapered triblock elastomer, additional ingredients may be included in the thermoplastic blends according to the present invention. Suitable additional additives include pigments, fiber reinforcement aids (such as glass roving, carbon fibers, etc.), extrusion aids, antioxidants, fillers, fire retardants, incorporated in amounts up to 15 percent by weight based on resin weight. The blend may be prepared by melt blending in a suitable mixer the respective ingredients until thorough incorporation is obtained.

Thermoplastic blends according to the present invention are easily prepared without the use of a extender oil or other suitable liquid ingredient to obtain thorough dispersion of the tapered triblock elastomer. The resulting blends moreover demonstrate improved impact resistance as indicated by increased Izod impact and Gardner impact values. The resulting thermoplastic blends are suitably employed in the preparation of molded objects for use as components in automobiles, machinery and toys.

Having described the invention the following examples are provided as further illustrative and are not to be construed as limiting. Unless stated otherwise all percentages and portions are measured in percentages and parts by weight.

Example 1

To a nitrogen purged 2 liter air-tight stirred reactor, 1350 mL purified cyclohexane was added. To the same vessel, 143 g of purified 1,3-butadiene and 70.5 g of purified styrene were added. The reaction mixture in the reactor was then heated to 50°C. Next 0.13 millimoles pentamethyl diethylene triamine (provides narrow molecular weight product) and a difunctional organolithium initiator of 2.6 millimoles 1,3-phenylene-bis(3-methyl-1-phenylpentylidene)-bis-(lithium) in toluene were added to initiate the polymerization. The temperature of the reaction mixture rose to about 80°C in about 25 minutes after initiation. Shortly thereafter the faintly yellow solution turned to an intense red color indicating that styrene polymerization had started. A second rise of temperature was observed. Afterwards the temperature started to subside. The polymerization was allowed to proceed for 30 minutes after the color change and then was terminated by the addition of isopropyl alcohol. The recovered block copolymer was a tapered styrene-butadiene-styrene (SBS) triblock polymer. The weight average molecular weight determined by GPC (gel permeation chromatography) was 96,600. Based on the feed weights, the polymer contained 67 percent butadiene and 33 percent styrene. It had a melt index of 5.6 (condition 200/5.0 ASTM method D1238-82). The tapered block copolymer is easily incorporated into polystyrene homopolymer (Mw 150,000) in an amount of 10 percent based on total resin weight by melt blending. The resulting resin blend is used to prepared moldings having good impact resistance.

Example 2 - Comparison of Polymer Blends

Two more tapered SBS block copolymers of different molecular weights were prepared in a 5 gallon (19 liters) reactor using essentially the same recipe as that in Example 1. Tapered triblock A had a melt index of 2.0 (Mw 103,000). Tapered triblock B had a melt index of 5.0 (Mw 97,000). Two untapered SBS block copolymers were prepared substantially according to the polymerization method described in U.S. Patent 3,465,065. Untapered triblock C had a melt index of 2.9 and D a melt index of 5.0. All four triblock copolymers were recovered from their polymerization solvents, extruded and cut into pellets. A commercially available untapered SBS block copolymer (Kraton® 1102) available from Shell Chemical Co. having a melt index of 6.0 in pellet form (E) was also used in the comparison.

The various triblock elastomers (5 weight percent) were dry blended with a rubber modified high impact polystyrene (77.35 weight percent) and ignition resistant additives (14.9 weight percent) and melt extruded and injection molded to provide test bars for property testing. Results are contained in Table I.

Table I

| | A | B | C* | D* | E* |
|---|---|---|---|---|---|
| Tensile Yield (MPa) | 20.7 | 20.7 | 20.7 | 20.7 | 20.7 |
| Tensile Rupture (MPa) | 23.3 | 23.3 | 23.4 | 22.5 | 23.6 |
| Tensile Modulus (MPa) | 2140 | 2000 | 2200 | 2000 | 2000 |
| % Elongation | 53 | 48 | 48 | 49 | 50 |
| Impact Strength (Izod) (J/m) | 115 | 117 | 111 | 114 | 108 |
| Impact Strength (J) (Gardner) | 10.4 | 11.5 | 5.6 | 6.1 | 5.1 |
| Flexural Strength (MPa) | 48.1 | 48.1 | 47.7 | 47.2 | 48.4 |
| Flexural Modulus (MPa) | 2070 | 2070 | 2070 | 2070 | 2070 |

*Not an example of the invention.

As may be seen by reference to the above tabulated results, moldings prepared from the resins according to the present invention possess improved impact resistance, especially Gardner impact resistance, compared to resins prepared utilizing untapered block copolymers.

Example 3

The reaction conditions of Example 1 are substantially repeated to prepare a sytrene-butadiene-styrene triblock copolymer having a weight average molecular weight of 50,000 by increasing the relative amount of initiator employed. The triblock copolymer had a styrene:butadiene ratio of 60:40. The resulting tapered block copolymer is melt blended with a styrene/acrylonitrile resin (acrylonitrile content 25 percent, Tyril® brand resin, available from The Dow Chemical Company) in an amount of 10 percent by weight to prepare an impact resistant composition.

Example 4

Styrene monomer is polymerized in cyclohexane solution with secbutyl lithium initiator to provide a polystyrene homopolymer segment. To the living anion solution a mixture of butadiene and styrene is added to prepare a triblock elastomer having only one tapered junction (referred to as half-tapered triblock copolymer). The ratio of styrene:butadiene was 10:90. The molecular weight of the elastomer was 147,000. The resulting half-tapered block copolymer is melt blended with crystalline polystyrene (Styron 615 available from The Dow Chemical Company) to prepare an impact resistant molding resin containing 20 percent by weight block copolymer.

Example 5

A high density polyethylene resin (High density Polyethylene 12065 available from The Dow Chemical Company) is combined with the tapered block copolymer prepared according to Claim 1 to provide a resin blend containing 1.0 percent by weight of the block copolymer suitable for use as molding resin.

**Claims**

1. A thermoplastic blend of:
1) a rigid thermoplastic polymer; and
2) from 0.5 to 20 weight percent of a tapered triblock elastomer of the formula A-B-A wherein B is a polymer of butadiene and each A block is a polymer of a monovinylidene aromatic monomer and at least one junction between the A and B blocks is tapered so as to include in copolymerized form increasing amounts of butadiene toward B block;
said thermoplastic blend being characterized in that the tapered triblock elastomer has a ratio of monovinylidene aromatic monomer:butadiene of 10:90 to 60:40; and an average molecular weight Mw of 50,000 to 150,000.

2. A thermoplastic blend according to Claim 1 wherein the rigid thermoplastic polymer is polystyrene, styrene acrylonitrile copolymer, or rubber modified derivatives thereof.

3. A thermoplastic blend according to Claim 1 wherein the tapered triblock elastomer is a copolymer of styrene and butadiene.

4. A thermoplastic blend according to Claim 1 wherein the tapered triblock elastomer has an average molecular weight of from 55,000 to 120,000.

5. A thermoplastic blend according to Claim 1 wherein the tapered block copolymer has a melt index (condition 200/5.0 ASTM method D1238-82) of 0.5 to 60.

6. A thermoplastic blend according to Claim 1 additionally comprising up to 15 percent based on resin weight, of one or more additives selected from, pigments, fiber reinforcement aids, extrusion aids, antioxidants, fillers and fire retardants.

7. A process for preparing the thermoplastic blend of Claim 1 comprising

1) a rigid thermoplastic polymer; and

2) from 0.5 to 20 weight percent of a tapered triblock elastomer of the formula A-B-A wherein B is a polymer of butadiene and each A block is a polymer of a monovinylidene aromatic monomer and at least one junction between the A and B blocks is tapered so as to include in copolymerized form increasing amounts of butadiene toward B block;

said thermoplastic blend being characterized in that the tapered triblock elastomer has ratio of monovinylidene aromatic monomer:butadiene of 10:90 to 60:40; and an average molecular weight Mw of 50,000 to 150,000.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | CHEMICAL ABSTRACTS, vol. 112, no. 2, 08 January 1990 Columbus, Ohio, USA page 27; ref. no. 8285Y & JP-A-61 291 610 (Japan Synthetic Rubber Co., Ltd.) 22-12-1986 * abstract * | 1 | C08L101/00 C08L25/04 //(C08L101/00, 53:02) (C08L25/04, 53:02) |
| D,A | US-A-3906058 (RICHARD R. DURST) | | |
| A | EP-A-118572 (THE DOW CHEMICAL COMPANY) * Page 1, lines 10-14; example 2; claims * | 1 | |
| A | DATABASE WPI, no. 79-71003b, Derwent Publications Ltd., London, GB; & JP-A-54 106 563 (DENKI KAGAKU KOGYO Co.) 08-02-1978 * abstract * | 1 | TECHNICAL FIELDS SEARCHED (Int. Cl.5 ) C08L |

The present search report has been drawn up for all claims

| Place of search | Date of completion of the search | Examiner |
|---|---|---|
| THE HAGUE | 18 OCTOBER 1990 | DE LOS ARCOS Y E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)